# EUROPEAN PATENT SPECIFICATION

(11) **EP 2 594 776 B1**
(45) Date of publication and mention of the grant of the patent: **11.05.2022**
(21) Application number: 11250903.9
(22) Date of filing: 18.11.2011
(51) Int. Cl.: F02C 7/277, F02N 15/00, F16D 41/12, F02N 7/14

(54) **Integrated accessory gearbox and engine starter**
Hilfsgetriebe, das mit einem Motoranlasser integriert ist
Boîte de vitesse auxiliaire et démarreur de moteur à accessoires intégrés

(43) Date of publication of application: 22.05.2013
(73) Proprietor: Hamilton Sundstrand Corporation, Charlotte, NC 28217 (US)
(72) Inventor: Blewett, Michael R., Sillman Valley, IL 61084 (US); Short, Keith E., Rockford, IL 61111 (US)
(74) Representative: Dehns

(56) References cited:
- SU-A1- 558 118
- US-A- 4 543 074
- US-A- 5 267 433
- US-A1- 2003 145 602
- US-A1- 2009 007 568
- AgentJayZ: "The Air Starter - Turbine Engines: A Closer Look", YouTube , 23 July 2011 (2011-07-23), XP002672132, Retrieved from the Internet: URL:http://www.youtube.com/watch?v=G28OlUq pUfE [retrieved on 2012-03-21]

## Description

### BACKGROUND

The present invention relates to gas turbine engines. In particular, the invention relates to the mounting of air turbine starters on accessory gearboxes.

Gas turbine engines require a significant torque be applied to rotate a compressor in the gas turbine, and thereby to provide sufficient compression to start the engine. Electric motors powerful enough to provide such torque can be used, but are relatively heavy. Where gas turbine engines are used for transportation purposes, for example, aircraft propulsion and power, such an extra weight penalty is undesirable. An air turbine starter (ATS) is generally employed as a substitute in such applications. The ATS is powered by compressed air from an external source. The compressed air passes over blades of an air turbine in the ATS and exits the ATS through an air exit port. As the air turbine rotates, it rotates a series of shafts connected to the compressor in the gas turbine engine, providing sufficient torque to start the engine.

For many gas turbine engines, the ATS is a stand alone line replaceable unit (LRU) that is mounted to the accessory gearbox. The ATS includes an overrunning clutch assembly that selectively couples the ATS's transmission to the output shaft. The overrunning clutch is supported by dedicated clutch bearings that are in turn supported by a separate transmission housing of the ATS. These features add size, weight, and cost to the ATS.

US 2009/007568 A1 discloses an engine starting apparatus and method that allows for two methods of engine start.

US 2003/145602 A1 discloses an air turbine starter including fluid flow control devices.

US 4 543 074 A discloses a device for coupling two rotary machines with provision for automatic uncoupling under certain operational conditions.

### SUMMARY

An air turbine starter and accessory gearbox assembly according to claim 1 and method of removing the air turbine starter from the accessory gearbox according to claim 4 are provided.

### BRIEF DESCRIPTION OF THE DRAWINGS

FIG. 1A is a perspective view of one embodiment of air turbine starter mounted to a casing of an accessory gearbox.
FIG. 1B is a perspective view of the air turbine starter removed from the accessory gearbox to show a clutch assembly.
FIG. 2 is a sectional view of portions of the air turbine starter and the accessory gearbox from FIG. 1A.
FIG. 3A is a sectional view of an output shaft of the air turbine starter coupled to a gear shaft of the accessory gearbox by a ball lock element.
FIG. 3B is a sectional view of the output shaft of the air turbine starter decoupled from the gear shaft of the accessory gearbox by a tool.

### DETAILED DESCRIPTION

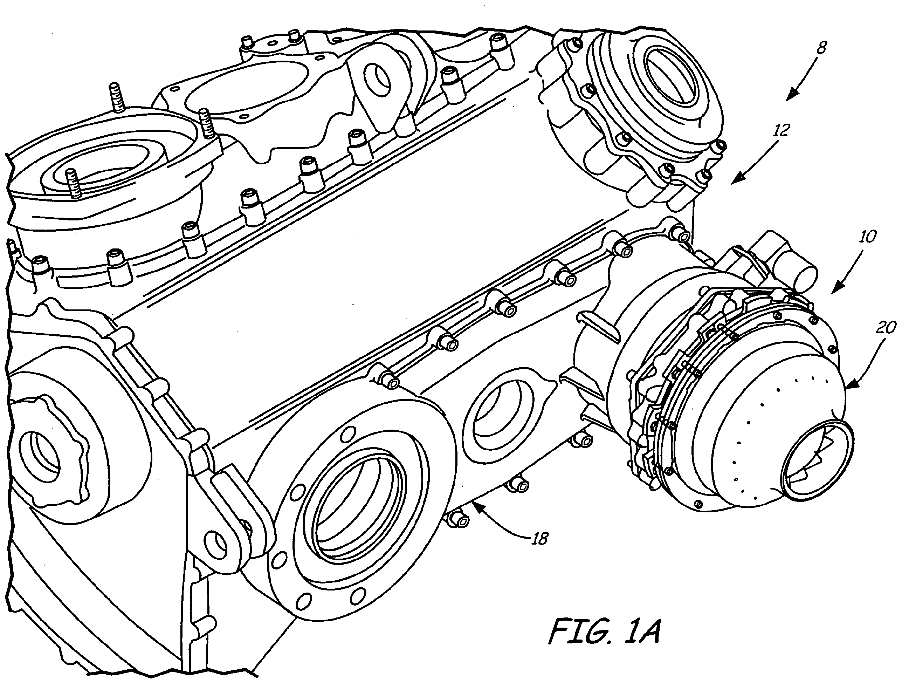

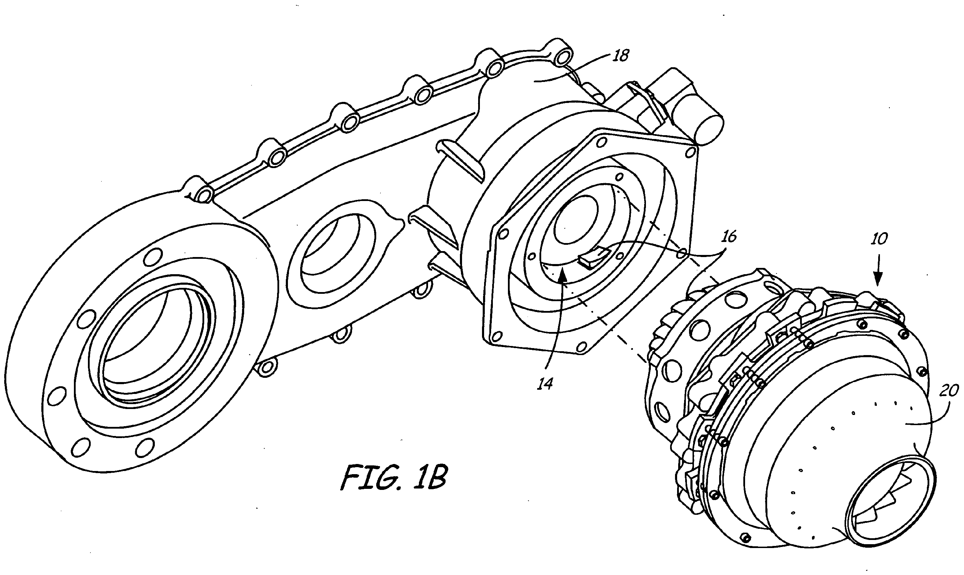

FIG. 1A illustrates an embodiment of an air turbine starter 10 mounted to an accessory gearbox 12 as an assembly 8. FIG. 1B shows the air turbine starter 10 removed from the accessory gearbox housing 18 to illustrate an output shaft 14 and a portion of a clutch assembly 16 of the air turbine starter 10.

In one embodiment both the air turbine starter 10 and the accessory gearbox 12 comprise line replaceable units (LRUs) that are mounted on, within, or adjacent a gas turbine engine. In particular, FIGS. 1A and 1B illustrate a housing 18 of the accessory gearbox 12. The housing 18 is also referred to as a casing 18 as both terms are intended to be synonymous. Similarly, the air turbine starter 10 includes a turbine housing 20 that surrounds and supports internal components of the air turbine starter 10. The accessory gearbox 12 is adapted to receive the air turbine starter 10 such that the housing 18 surrounds a portion of the air turbine starter 10 when the air turbine starter 10 and accessory gearbox 12 are assembled together. In particular, as is illustrated in FIG. 1B, the output shaft 14 and a portion of the clutch assembly 16 are surrounded by the housing 18 of the accessory gearbox 12. As will be discussed subsequently, a gear shaft (not shown) of the accessory gearbox 12 supports the output shaft 14 of the air turbine starter 10 allowing it to be disposed within the housing 18 of the accessory gearbox 12. This support configuration, along with other structures detailed subsequently, allow for the elimination of a dedicated clutch bearing, the elimination of an additional air turbine starter transmission housing, and a reduction in the overall number of housing split lines for the air turbine starter 10 and the accessory gearbox 12 assembly 8. These eliminations and reductions in parts reduce the size, weight, and cost of the assembly 8.

The air turbine starter 10 and accessory gearbox 12 operate in a conventional manner to apply torque to rotate a compressor in the gas turbine engine to provide sufficient compression to start the engine. The clutch assembly 16 shown in FIG. 1B is a conventional over-running clutch, such at those disclosed in United States Patents 5,205,386, 5,246,094, and 5,257,685, which are incorporated herein by reference. The clutch assembly 16 acts to engage the transmission components of the air turbine starter 10 to the gas turbine engine for start-up and disengage the transmission components from the gas turbine engine once the gas turbine engine achieves operational speeds.

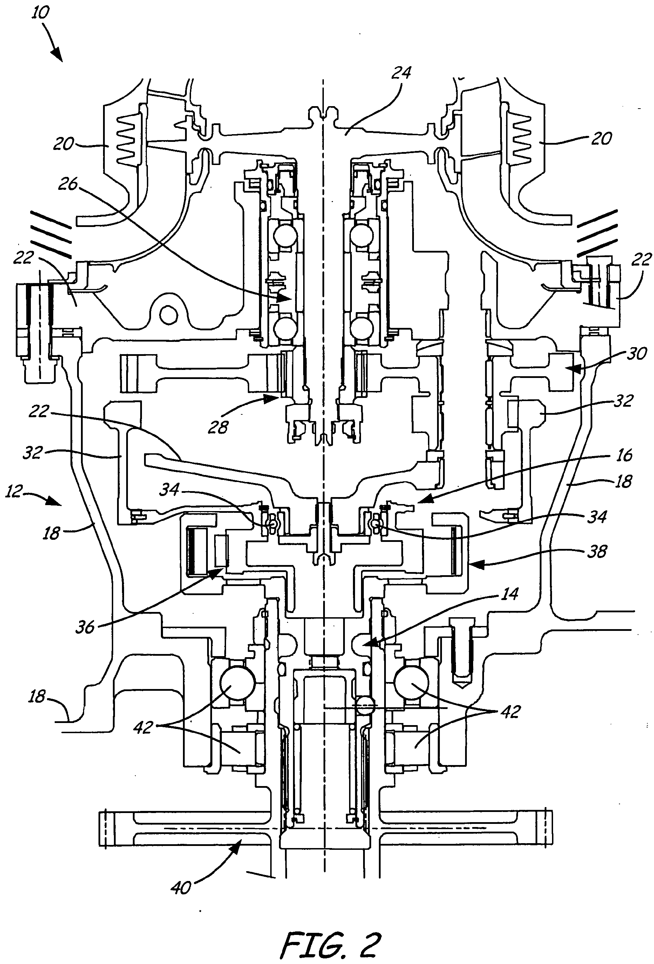

FIG. 2 shows a sectional view of portions of the air turbine starter 10 and the accessory gearbox 12 assembled together. In addition to the output shaft 14, the clutch assembly 16, and the turbine housing 20, the air turbine starter 10 includes a carrier housing 22, a turbine 24, a turbine spindle assembly 26, a pinion 28, planet gears 30, ring gear 32, and the ring gear support bearing 34. The clutch assembly 16 includes an inner element 36 and an outer element 38. The accessory gearbox 12 includes a gear shaft 40 and gearbox shaft bearings 42.

As shown in FIG. 2, the turbine housing 20 is disposed around and connected to the carrier housing 22. The turbine housing 20 and the carrier housing 22 are disposed about the turbine 24 and together the housings 20 and 22 form a flow path for compressed air. The turbine 24 is rotatably connected to and extends through the turbine spindle assembly 26, which includes support bearings for the turbine 24, turbine wheel, and the pinion 28. The pinion 28 connects to the turbine 24 and meshes with the planet gears 30. Although only one planet gear 30 is illustrated in FIG. 2, one or more planet gears 30 can be assembled to transfer torque from the turbine 24 to the ring gear 32. The ring gear 32 meshes with the planet gears 30 and connects to the inner element 36 of the clutch assembly 16. The ring gear support bearing 34 is disposed adjacent the clutch assembly 16 to support the ring gear 32 and the inner element 36. The inner element 36 of the clutch extends from the ring gear 32 and interfaces with the outer element 38. As is known in the art, the inner element 36 can include a plurality of ratchets that interact with pawls disposed on the outer element 38 to transfer torque from the inner element 36 to the outer element 38 during gas turbine engine start-up.

The outer element 38 of the clutch assembly 16 connects to the output shaft 14 of the air turbine starter 10. The output shaft 14 extends into and is coupled to and supported by the gear shaft 40. In one embodiment, the output shaft 14 is connected in a close fit engagement with gear shaft 40. This connection allows the gear shaft 40 to support the output shaft 14 of the air turbine starter 10 without the use of additional bearings. The gearbox shaft bearings 42 are disposed radially outward of and between the gear shaft 42 and the housing 18.

The housing 18 of the accessory gearbox 12 encloses and contains rotating elements that transfer power to the gas turbine engine and accessories during engine start-up. The turbine housing 20 and the carrier housing 22 are mounted to the housing 18 by fasteners and protect and support components internal thereto such as the turbine 24 and turbine spindle 26. The turbine 24 is rotated to provide start-up torque for the gas turbine engine by compressed gas passing between the carrier housing 22 and turbine housing 20 and passing over the blades of the turbine 24. The turbine spindle 26 supports the turbine 24 and the pinion 28, allowing for a transfer of start-up torque from the turbine 24 to the planet gears 30. The planet gears 30 transmit torque to the ring gear 32 and reduce the rotational speed from the rotational speed of the turbine 24 to the rotational speed of the output shaft 14. As is known in the art, the clutch assembly 16 restricts the direction of driving torque from the air turbine starter 10 to the output shaft 14 such that torque cannot be transmitted to the air turbine starter 10 from the gas turbine engine via the gear shaft 40 and output shaft 14. In fact, once the gas turbine engine has started and the gear shaft 40 and the output shaft 14 achieve operational speeds, the pawls disposed on the outer element 38 retract from contact with the ratchets on inner element 36 so that torque is not transferred to the ring gear 32, planet gears 30, and the turbine 24. The ring gear support bearing 34 and gearbox shaft bearings 42 support the ring gear 30 and gear shaft 40 respectively, and allow for rotation of the ring gear 30 and gear shaft 40 with respect to the housing 18 of the accessory gearbox 12.

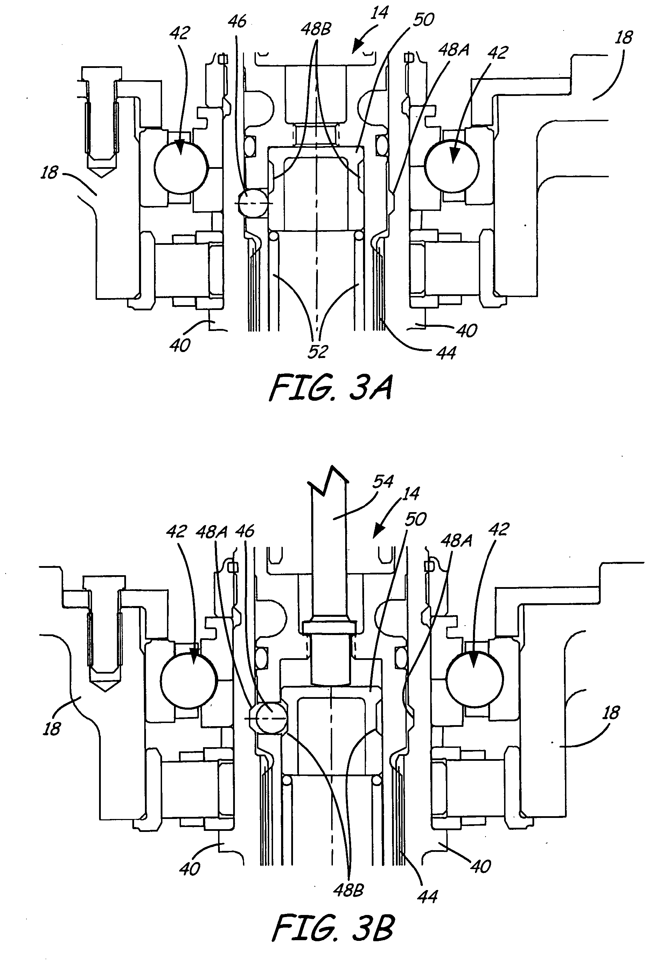

FIGS. 3A and 3B show portions of the output shaft 14 and the gear shaft 40 from FIG. 2. In addition to the output shaft 14, the casing 18, the gear shaft 40, and the gearbox shaft bearings 42, FIGS. 3A and 3B show splines 44, ball lock elements 46, detents 48A and 48B, a plunger 50, spring 52, and an assembly tool 54.

In FIG. 3A, the output shaft 14 is coupled to the gear shaft 40. In particular, a portion of the output shaft 14 is disposed within the gear shaft 40 such that it is in a close fit engagement therewith. This allows the output shaft 14 to be solely supported by the gear shaft 40. The splines 44 on the gear shaft 40 and output shaft engage one another and transfer the start torque from the air turbine starter 10 to the gas turbine engine. In FIG. 3A, the ball lock elements 46 (typically three) are disposed between the output shaft 14 and the gear shaft 40 so as to engage the annular detent 48A on the gear shaft 40. The output shaft 14 includes the plunger 50 and the spring 52. The plunger 50 is movable relative to the remainder of the output shaft 14 and the spring 52 engages a lower portion of the plunger 50. The plunger 50 also includes an annular detent 48B. As illustrated in FIG. 3B, the assembly tool 54 can be used to move the plunger 50 relative to the remainder of the output shaft 14 and gear shaft 40 by depressing the spring 52.

The splines 44 allow for the transfer of torque from the output shaft 14 to the gear shaft 40. In FIG. 3A, axial motion of the output shaft 14 relative to the gear shaft 40 is arrested by the ball lock elements 46, which engage the detent 48A in the gear shaft 40 so as to axially couple the output shaft 14 to the gear shaft 40. In FIG. 3A, the plunger 50 is biased upward by the spring 52 to force the ball lock elements 46 into engagement with the detent 48A in the gear shaft 40.

To decouple the output shaft 14 from the gear shaft 40 for replacement or repair, the inner element 36 (FIG. 2) of the clutch assembly 16 (FIG. 2) is removed by retracting the pawls of the clutch assembly 16 from engagement with the ratchets of the inner element 36 (FIG. 2). This allows the air turbine starter 10 (FIG. 1A), save for the outer element 38 of the clutch assembly 16 and the output shaft 14 to be removed from the accessory gearbox 12 (FIGS. 1B).

FIG. 3B shows the output shaft 14 in a decoupled position from the gear shaft 40. This position allows for axial removal of the output shaft 14 from the accessory gearbox 12 (FIG. 1B) for replacement or repair. In FIG. 3B, the ball lock elements 46 are no longer engaged by the plunger 50 and have ramped out of engagement with the detent 48A in the gear shaft 40. The ball lock elements 46 are now engaged with the detents 48B in the plunger 50. The plunger 50 is depressed into the position shown in FIG. 3B by the assembly tool 54, which overcomes the bias of the spring 52 to force the plunger 50 to move axially relative to the output shaft 14 and the gear shaft 40. In FIG. 3B, the output shaft 14 is free to move axially relative to gear shaft 40 and can be removed.

## Claims

1. An assembly (8) comprising:
an air turbine starter (10) having an output shaft (14) and a clutch assembly (16); and
an accessory gearbox (12) having a gear shaft (40) that is coupled to the output shaft (14) of the air turbine starter (10), wherein the gear shaft (40) receives the output shaft (14) in a close fit engagement such that a portion of the output shaft (14) is disposed within the gear shaft (40) allowing the gear shaft (40) to solely support the output shaft (14), the accessory gearbox having a casing (18) that extends around at least a portion of the clutch assembly (16) and the output shaft (14) of the air turbine starter (10) when the air turbine starter (10) is mounted on the accessory gearbox (12);
**characterized in that** the assembly (8) further comprises:
a ball lock element (46) disposed between the gear shaft (40) and the output shaft (14), wherein the gear shaft (40) and the output shaft (14) each include a detent feature (48A, 48B) capable of receiving a portion of the ball lock element (46);
wherein the output shaft (14) has a plunger (50) and spring (52), the spring (52) biasing the plunger (50) which engages the ball lock element (46) with the gear shaft (40).

2. The assembly of claim 1, further comprising a tool (54) that depresses the plunger (50) to overcome the bias of the spring (52) and disengage the ball lock element (46) from the gear shaft (40).

3. The assembly of claim 1, wherein the air turbine starter (10) has a gear assembly (28, 30, 32) as well as clutch assembly (16) connecting the output shaft (14) to a turbine spindle (26), and wherein the casing (18) of the accessory gearbox (12) extends around the clutch assembly (16) of the air turbine starter (10) when the air turbine starter (10) is mounted on the accessory gearbox (12).

4. A method of removing an air turbine starter (10) from an accessory gearbox (12), the method comprising:
providing an air turbine starter (10) having an output shaft (14) mounted in a gear shaft (40) of the accessory gearbox (12), wherein the air turbine starter (10) includes a clutch assembly (16) including an inner element (36) and an outer element (38), and the inner element (36) includes a plurality of ratchets that interact with pawls disposed on the outer element (38) to transfer torque from the inner element (36) to the outer element (38);
retracting the pawls of the clutch assembly (16) from contact with the ratchets of the clutch assembly to allow a portion of the air turbine starter (10) to be removed from the accessory gearbox (16); depressing a plunger (50) disposed within the gear shaft (40) to overcome a bias of a spring (52) and disengage a ball lock element (46) from the gear shaft (40), wherein the ball lock element (46) is disposed between the gear shaft (14) and the output shaft (40), and wherein the gear shaft (40) and the plunger (52) each include a detent feature (48A, 48B) capable of receiving a portion of the ball lock element (46); and
removing the output shaft (14) by axially moving the output shaft (14) relative to the gear shaft (40).

5. The method of claim 4, wherein a tool (54) depresses the plunger (50) to overcome the bias of the spring (52) and disengage the ball lock element (46) from the gear shaft (40).

6. The method of claim 4 or 5, wherein the accessory gearbox (12) is adapted to receive the air turbine starter (10) such that a casing (18) of the accessory gearbox (12) extends around the output shaft (14) of the air turbine starter (10) when the air turbine starter (10) is mounted on the accessory gearbox (12).

7. The method of claim 6, wherein the air turbine starter (10) has a gear assembly (28, 30, 32) and clutch assembly (16) connecting the output shaft (14) to a turbine spindle (26), and wherein the casing (18) of the accessory gearbox (12) extends around the clutch assembly (16) of the air turbine starter (10) when the air turbine starter (10) is mounted on the accessory gearbox (12).

## Patentansprüche

1. Anordnung (8), umfassend:
einen Luftturbinenanlasser (10), der eine Abtriebswelle (14) und eine Kupplungsanordnung (16) aufweist; und
ein Hilfsgetriebe (12), das eine Getriebewelle (40) aufweist, die mit der Abtriebswelle (14) des Luftturbinenanlassers (10) gekoppelt ist, wobei die Getriebewelle (40) die Abtriebswelle (14) in einem enganliegenden Eingriff aufnimmt, sodass ein Teil der Abtriebswelle (14) innerhalb der Getriebewelle (40) angeordnet ist, was es der Getriebewelle (40) ermöglicht, die Abtriebswelle (14) allein zu tragen, wobei das Hilfsgetriebe ein Gehäuse (18) aufweist, das sich um mindestens einen Teil der Kupplungsanordnung (16) und der Abtriebswelle (14) des Luftturbinenanlassers (10) erstreckt, wenn der Luftturbinenanlasser (10) an dem Hilfsgetriebe (12) montiert ist;
**dadurch gekennzeichnet, dass** die Anordnung (8) ferner umfasst:
ein Kugelsperrelement (46), das zwischen der Getriebewelle (40) und der Abtriebswelle (14) angeordnet ist, wobei die Getriebewelle (40) und die Abtriebswelle (14) jeweils ein Arretierungsmerkmal (48A, 48B) aufweisen, das in der Lage ist, einen Teil des Kugelsperrelements (46) aufzunehmen;
wobei die Abtriebswelle (14) einen Kolben (50) und eine Feder (52) aufweist, wobei die Feder (52) den Kolben (50) vorspannt, der das Kugelsperrelement (46) mit der Getriebewelle (40) in Eingriff bringt.

2. Anordnung nach Anspruch 1, ferner umfassend ein Werkzeug (54), das den Kolben (50) niederdrückt, um die Vorspannung der Feder (52) zu überwinden und das Kugelsperrelement (46) von der Getriebewelle (40) zu entkoppeln.

3. Anordnung nach Anspruch 1, wobei der Luftturbinenanlasser (10) eine Getriebeanordnung (28, 30, 32) sowie eine Kupplungsanordnung (16) aufweist, die die Abtriebswelle (14) mit einer Turbinenspindel (26) verbindet, und wobei sich das Gehäuse (18) des Hilfsgetriebes (12) um die Kupplungsanordnung (16) des Luftturbinenanlassers (10) herum erstreckt, wenn der Luftturbinenanlasser (10) an dem Hilfsgetriebe (12) montiert ist.

4. Verfahren zum Entfernen eines Luftturbinenanlassers (10) aus einem Hilfsgetriebe (12), wobei das Verfahren umfasst:
Bereitstellen eines Luftturbinenanlassers (10), der eine Abtriebswelle (14) aufweist, die in einer Getriebewelle (40) des Hilfsgetriebes (12) montiert ist, wobei der Luftturbinenanlasser (10) eine Kupplungsanordnung (16) beinhaltet, die ein inneres Element (36) und ein äußeres Element (38) beinhaltet, und das innere Element (36) eine Vielzahl von Ratschen beinhaltet, die mit an dem äußeren Element (38) angeordneten Sperrklinken zusammenwirkt, um ein Drehmoment von dem inneren Element (36) auf das äußere Element (38) zu übertragen;
Zurückziehen der Sperrklinken der Kupplungsanordnung (16) aus dem Kontakt mit den Ratschen der Kupplungsanordnung, um es einem Teil des Luftturbinenanlassers (10) zu ermöglichen, aus dem Hilfsgetriebe (16) entfernt zu werden; Niederdrücken eines Kolbens (50), der in der Getriebewelle (40) angeordnet ist, um eine Vorspannung einer Feder (52) zu überwinden und ein Kugelsperrelement (46) von der Getriebewelle (40) zu lösen, wobei das Kugelsperrelement (46) zwischen der Getriebewelle (14) und der Abtriebswelle (40) angeordnet ist und wobei die Getriebewelle (40) und der Kolben (52) jeweils ein Arretierungsmerkmal (48A, 48B) beinhalten, das in der Lage ist, einen Teil des Kugelsperrelements (46) aufzunehmen; und
Entfernen der Abtriebswelle (14) durch axiales Bewegen der Abtriebswelle (14) relativ zu der Getriebewelle (40).

5. Verfahren nach Anspruch 4, wobei ein Werkzeug (54) den Kolben (50) niederdrückt, um die Vorspannung der Feder (52) zu überwinden und das Kugelsperrelement (46) von der Getriebewelle (40) zu entkoppeln.

6. Verfahren nach Anspruch 4 oder 5, wobei das Hilfsgetriebe (12) so ausgelegt ist, dass es den Luftturbinenanlasser (10) aufnimmt, sodass sich ein Gehäuse (18) des Hilfsgetriebes (12) um die Abtriebswelle (14) des Luftturbinenanlassers (10) erstreckt, wenn der Luftturbinenanlasser (10) an dem Hilfsgetriebe (12) montiert ist.

7. Verfahren nach Anspruch 6, wobei der Luftturbinenanlasser (10) eine Getriebeanordnung (28, 30, 32) und eine Kupplungsanordnung (16) aufweist, die die Abtriebswelle (14) mit einer Turbinenspindel (26) verbindet, und wobei sich das Gehäuse (18) des Hilfsgetriebes (12) um die Kupplungsanordnung (16) des Luftturbinenanlassers (10) herum erstreckt, wenn der Luftturbinenanlasser (10) an dem Hilfsgetriebe (12) montiert ist.

## Revendications

1. Ensemble (8) comprenant :
un démarreur de turbine à air (10) ayant un arbre de sortie (14) et un ensemble embrayage (16) ; et
une boîte de vitesses auxiliaire (12) ayant un arbre de transmission (40) qui est couplé à l'arbre de sortie (14) du démarreur de turbine à air (10), dans lequel l'arbre de transmission (40) reçoit l'arbre de sortie (14) dans une mise en prise à ajustement serré de sorte qu'une partie de l'arbre de sortie (14) est disposée à l'intérieur de l'arbre de transmission (40) permettant à l'arbre de transmission (40) de supporter uniquement l'arbre de sortie (14), la boîte de vitesses auxiliaire ayant un carter (18) qui s'étend autour d'au moins une partie de l'ensemble embrayage (16) et de l'arbre de sortie (14) du démarreur de turbine à air (10) lorsque le démarreur de turbine à air (10) est monté sur la boîte de vitesses auxiliaire (12) ;
**caractérisé en ce que** l'ensemble (8) comprend en outre :
un élément de verrouillage à bille (46) disposé entre l'arbre de transmission (40) et l'arbre de sortie (14), dans lequel l'arbre de transmission (40) et l'arbre de sortie (14) comportent chacun un élément de détente (48A, 48B) capable de recevoir une partie de l'élément de verrouillage à bille (46) ;
dans lequel l'arbre de sortie (14) a un plongeur (50) et un ressort (52), le ressort (52) sollicitant le plongeur (50) qui met en prise l'élément de verrouillage à bille (46) avec l'arbre de transmission (40).

2. Ensemble selon la revendication 1, comprenant en outre un outil (54) qui enfonce le plongeur (50) pour surmonter la sollicitation du ressort (52) et libérer l'élément de verrouillage à bille (46) de l'arbre de transmission (40).

3. Ensemble selon la revendication 1, dans lequel le démarreur de turbine à air (10) a un ensemble engrenage (28, 30, 32) ainsi qu'un ensemble embrayage (16) connectant l'arbre de sortie (14) à une broche de turbine (26), et dans lequel le carter (18) de la boîte de vitesses auxiliaire (12) s'étend autour de l'ensemble embrayage (16) du démarreur de turbine à air (10) lorsque le démarreur de turbine à air (10) est monté sur la boîte de vitesses auxiliaire (12).

4. Procédé de retrait d'un démarreur de turbine à air (10) d'une boîte de vitesses auxiliaire (12), le procédé comprenant :
la fourniture d'un démarreur de turbine à air (10) ayant un arbre de sortie (14) monté dans un arbre de transmission (40) de la boîte de vitesses auxiliaire (12), dans lequel le démarreur de turbine à air (10) comporte un ensemble embrayage (16) comportant un élément interne (36) et un élément externe (38), et l'élément interne (36) comporte une pluralité de rochets qui interagissent avec des cliquets disposés sur l'élément externe (38) pour transférer le couple de l'élément interne (36) à l'élément externe (38) ;
le retrait des cliquets de l'ensemble embrayage (16) du contact avec les rochets de l'ensemble embrayage pour permettre à une partie du démarreur de turbine à air (10) d'être retirée de la boîte de vitesses auxiliaire (16) ; l'enfoncement d'un plongeur (50) disposé à l'intérieur de l'arbre de transmission (40) pour surmonter une sollicitation d'un ressort (52) et libérer un élément de verrouillage à bille (46) de l'arbre de transmission (40), dans lequel l'élément de verrouillage à bille (46) est disposé entre l'arbre de transmission (14) et l'arbre de sortie (40), et dans lequel l'arbre de transmission (40) et le plongeur (52) comportent chacun un élément de détente (48A, 48B) capable de recevoir une partie de l'élément de verrouillage à bille (46) ; et
le retrait de l'arbre de sortie (14) en déplaçant axialement l'arbre de sortie (14) par rapport à l'arbre de transmission (40).

5. Procédé selon la revendication 4, dans lequel un outil (54) enfonce le plongeur (50) pour surmonter la sollicitation du ressort (52) et libérer l'élément de verrouillage à bille (46) de l'arbre de transmission (40).

6. Procédé selon la revendication 4 ou 5, dans lequel la boîte de vitesses auxiliaire (12) est conçue pour recevoir le démarreur de turbine à air (10) de sorte qu'un carter (18) de la boîte de vitesses auxiliaire (12) s'étend autour de l'arbre de sortie (14) du démarreur de turbine à air (10) lorsque le démarreur de turbine à air (10) est monté sur la boîte de vitesses auxiliaire (12).

7. Procédé selon la revendication 6, dans lequel le démarreur de turbine à air (10) a un ensemble engrenage (28, 30, 32) ainsi qu'un ensemble embrayage (16) connectant l'arbre de sortie (14) à une broche de turbine (26), et dans lequel le carter (18) de la boîte de vitesses auxiliaire (12) s'étend autour de l'ensemble embrayage (16) du démarreur de turbine à air (10) lorsque le démarreur de turbine à air (10) est monté sur la boîte de vitesses auxiliaire (12).
